# EUROPÄISCHE PATENTANMELDUNG

(11) **EP 3 150 925 A1**
(43) Veröffentlichungstag der Anmeldung: **05.04.2017**
(21) Anmeldenummer: 15187297.5
(22) Anmeldetag: 29.09.2015
(51) Int. Cl.: F24D 3/14, F24D 19/06, F24F 7/00, F28D 11/04

(54) **ANORDNUNG MIT EINEM HEIZKÖRPER UND VERFAHREN ZUM BETREIBEN DERSELBEN**

(71) Anmelder: Möhlenhoff GmbH, 38229 Salzgitter (DE)
(72) Erfinder: Geburek, Frank, 31162 Bad Salzdethfurt (DE); Kipp, Christian, 27367 Hellwege (DE)
(74) Vertreter: Döring, Roger

(57) **Zusammenfassung**

Es wird eine Anordnung mit einem langgestreckten Heizkörper und einer wannenförmigen Rinne mit etwa rechteckigem Querschnitt angegeben, bei welcher der Heizkörper in Arbeitsposition in der Rinne angeordnet ist. Der Heizkörper hat Anschlußelemente zum Zuführen eines Heizmediums und auf der ganzen äußeren Oberfläche des Heizkörpers sind nach außen abstehende Vorsprünge angebracht. Der Heizkörper ist in der Rinne um seine Achse drehbar gelagert und mit einem Antrieb verbunden, durch welchen er während des Betriebes der Anordnung um seine Achse drehbar ist. Es wird außerdem ein Verfahren zum Betreiben der Anordnung angegeben.

## Beschreibung

Die Erfindung bezieht sich auf eine Anordnung mit einem langgestreckten Heizkörper und einer wannenförmigen Rinne mit etwa rechteckigem Querschnitt, bei welcher der Heizkörper in Arbeitsposition in der Rinne angeordnet ist, bei welcher der Heizkörper Anschlußelemente zum Zuführen eines Heizmediums hat und bei welcher auf der ganzen äußeren Oberfläche des Heizkörpers nach außen abstehende Vorsprünge angebracht sind sowie auf ein Verfahren zum Betreiben der Anordnung (DE 31 10 082 C2).

Eine derartige Anordnung wird auch als Konvektor bezeichnet. Diese kürzere Bezeichnung wird im Folgenden verwendet. Konvektoren werden beispielsweise als Zusatzheizungen zur Kaltluftabschirmung an großen Fensterflächen oder ungeschützten Außenwänden eingesetzt. Sie können aber auch als einzige Wärmequelle zur Beheizung von Räumen verwendet werden, beispielsweise von Wohnräumen. Die in der wannenförmigen Rinne angebrachten Heizkörper können elektrisch oder mittels Wasser oder Dampf beheizt werden. Der Aufbau der Heizkörper kann beliebig sein, solange sie in der zugehörigen Rinne angeordnet werden können. Die Konvektoren können beispielsweise in entsprechenden Ausnehmungen eines Fußbodens oder auch auf dem Fußboden mit Vorteil in der Nähe einer Fensterfläche eingebaut oder aufgebaut werden. Die nach oben offene Rinne kann mit einer für Säuberungszwecke leicht abzunehmenden und wieder anzubringenden Abdeckung verschlossen werden. Eine geeignete Abdeckung ist beispielsweise ein Rollrost.

Der bekannte Konvektor nach der eingangs erwähnten DE 31 10 082 C2 hat einen Heizkörper, der auf seiner ganzen Länge mit parallel und mit Abstand zueinander angeordneten Platten ausgerüstet ist. Die wannenförmige Rinne ist an beiden Stirnseiten luftdicht verschlossen. An einer Stirnseite ist in der Rinne ein Gebläse angeordnet. Es sind außerdem Luftleitelemente in der Rinne angebracht, durch welche der vom Gebläse erzeugte Luftstrom und andere in die Rinne gelangende Luft mit einer Art Zwangsströmung so durch die Platten des Heizkörpers geleitet werden, daß Warmluft vom Heizkörper aufsteigt. Dieser Konvektor hat sich in der Praxis bewährt. Er ist aber relativ aufwendig gebaut.

Der Erfindung liegt die Aufgabe zugrunde, den eingangs geschilderten Konvektor einfacher zu gestalten.

Diese Aufgabe wird gemäß der Erfindung dadurch gelöst, daß der Heizkörper in der Rinne um seine Achse drehbar gelagert und mit einem Antrieb verbunden ist, durch welchen er während des Betriebes der Anordnung um seine Achse drehbar ist.

Dieser Konvektor ist mit relativ wenig Einzelteilen einfach aufgebaut. Es werden in einer einfachen Ausführungsform nur die wannenförmige Rinne, der Heizkörper mit einem Anschluß für ein Heizmedium und ein Antrieb benötigt. Die im Konvektor vorhandene Luft wird durch den sich drehenden Heizkörper infolge von Haftreibung in eine Drehbewegung versetzt. Dadurch wird außerhalb des Konvektors vorhandene Kaltluft, die beispielsweise von einer Fensterfläche eines Raums in einem Gebäude herabfällt, mitgerissen bzw. angesaugt, so daß das Volumen des an den Heizkörper gelangenden Luftstroms vergrößert wird. Von dem Heizkörper wird daher in einer Art Zwangskonvektion ein vergrößertes Luftvolumen erwärmt, wodurch die Leistung des Konvektors und damit sein Wirkungsgrad wesentlich erhöht werden.

Als Heizmedium für den Konvektor wird in bevorzugter Ausführungsform warmes bzw. heißes Wasser verwendet, das durch den Heizkörper hindurchgeleitet wird. Der Heizkörper hat dazu Anschlußelemente, die zum Zuführen und zum Abführen des Wassers geeignet sind. Solche Anschlußelemente sind beispielsweise Drehverschraubungen, die bekannt und auf dem Markt erhältlich sind.

Heizmedien können in weiteren Ausführungsformen auch elektrischer Strom oder Dampf sein.

Die von der Oberfläche des Heizkörpers abstehenden Vorsprünge sind in bevorzugter Ausführungsform Platten, die parallel und mit Abstand zueinander auf der ganzen Länge des Heizkörpers angeordnet sind. Bei dieser Ausführungsform hat der Heizkörper insgesamt eine für das Erwärmen der Luft wirksame sehr große Oberfläche.

In einer weiteren Ausführungsform können die Vorsprünge auch als Stifte ausgeführt sein, die getrennt voneinander auf der ganzen Oberfläche des Heizkörpers nach außen abstehen. Sie haben mit Vorteil eine Form, welche das Mitreißen von Luft begünstigt.

Als Antrieb für den Heizkörper werden mit Vorteil ein hydraulischer Antrieb oder ein Elektromotor eingesetzt.

Ausführungsbeispiele des Erfindungsgegenstandes sind in den Zeichnungen dargestellt.

Es zeigen:
Fig. 1 in schematischer Darstellung einen im Bereich einer Fensterfläche eingebauten Konvektor.
Fig. 2 schematisch eine Stirnansicht des Konvektors nach der Erfindung in vergrößerter Darstellung.
Fig. 3 eine Seitenansicht eines Heizkörpers für einen Konvektor nach der Erfindung.
Fig. 4 und 5 Stirnansichten von zwei unterschiedlichen Heizkörpern.
Fig. 6 eine Seitenansicht eines gegenüber Fig. 2 geänderten Heizkörpers.

In der folgenden Beschreibung wird weiter das Wort Konvektor statt des Wortes Anordnung verwendet. Der im Konvektor eingesetzte Heizkörper besteht einschließlich der von ihm abstehenden Vorsprünge aus einem gut wärmeleitenden Metall, wie beispielsweise Kupfer oder Aluminium. Als Heizmedium wird in bevorzugter Ausführungsform warmes bzw. heißes Wasser eingesetzt. Auch elektrischer Strom oder Dampf könnten als Heizmedium verwendet werden. Die folgenden Ausführungen berücksichtigen nur warmes bzw. heißes Wasser, stellvertretend auch für die anderen verwendbaren Heizmedien. Der Konvektor kann im Fußboden eines Raumes eines Gebäudes eingebaut sein. Er kann aber auch auf dem Fußboden aufgestellt sein. Der Heizkörper hat in bevorzugter Ausführungsform insgesamt einen runden, insbesondere kreisrunden Querschnitt. Er kann aber auch einen quadratischen bzw. rechteckigen oder einen polygonen oder einen ovalen Querschnitt haben, solange er problemlos in der Rinne des Konvektors um seine Achse gedreht werden kann.

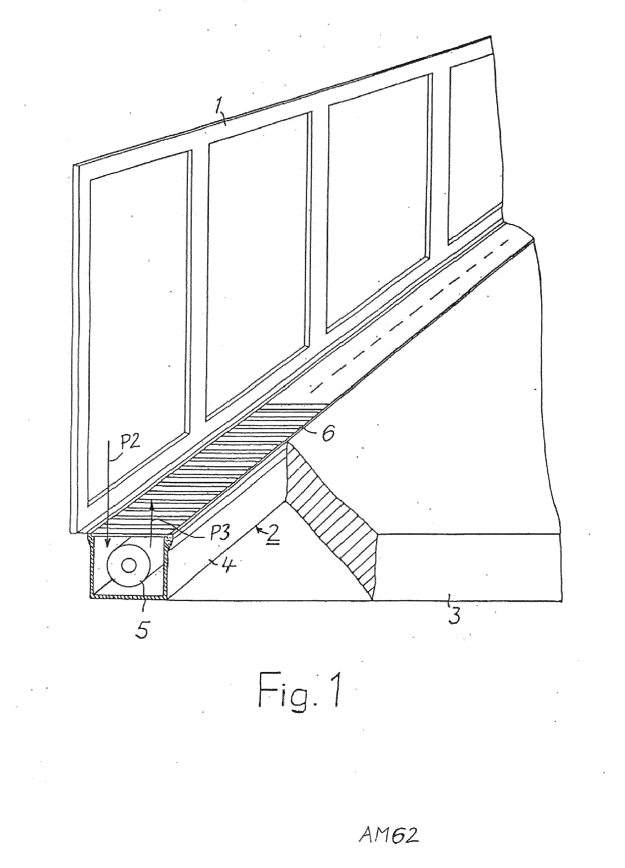

Bei dem in Fig. 1 dargestellten Ausführungsbeispiel ist unterhalb einer Fensterfläche 1 eines Gebäudes ein Konvektor 2 in den Fußboden 3 eines Raumes eingelassen. Der Konvektor 2 weist eine wannenförmige Rinne 4 mit etwa rechteckigem Querschnitt auf, die beispielsweise aus Aluminium oder einem stabilen Kunststoff besteht. In der Rinne 4 ist ein schematisch angedeuteter langgestreckter Heizkörper 5 angebracht. Die Rinne 4 kann mit einem Rollrost 6 abgedeckt sein, dessen Oberkante im dargestellten Ausführungsbeispiel mit der Oberkante des Fußbodens 3 abschließt. Der Heizkörper 5 weist mit Vorteil eine Vielzahl von parallel und mit Abstand zueinander angeordnete metallische Platten auf, die an einem zur Führung eines Heizmediums dienenden Rohr angebracht sind. Die Platten sind vorzugsweise kreisrund ausgeführt.

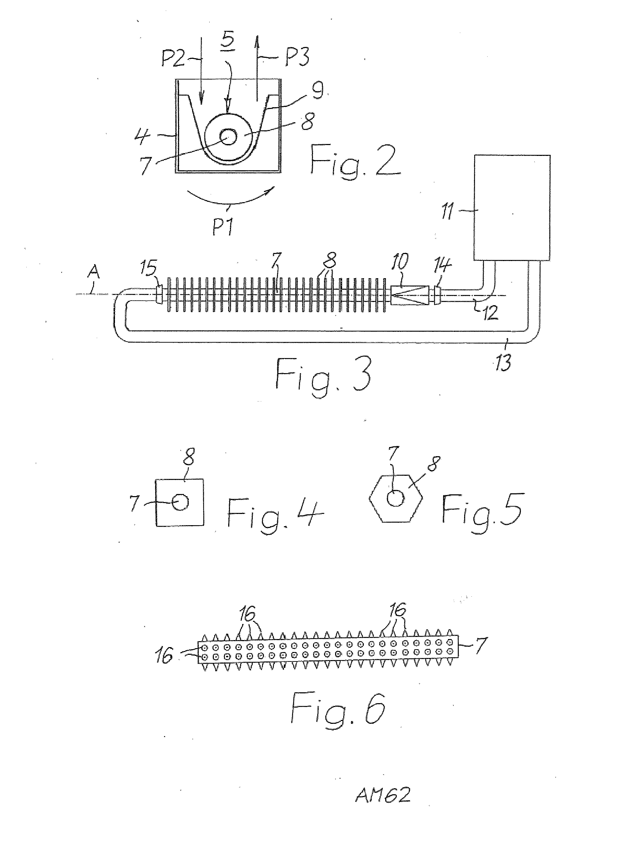

Der Heizkörper 5 des Konvektors 2 hat im Ausführungsbeispiel nach Fig. 2 insgesamt einen kreisrunden Querschnitt. Er weist ein zentrales Rohr 7 auf, auf dem gemäß Fig. 3 auf seiner ganzen axialen Länge eine Vielzahl von aus Metall bestehenden Platten 8 angebracht ist. Die Platten 8 sind parallel und mit Abstand zueinander am Rohr 7 befestigt. Der Heizkörper 5 ist um seine Achse A drehbar in der Rinne 4 angeordnet. Er dreht sich während des Betriebes des Konvektors 2 in Richtung des Pfeiles P1 um seine Achse. Dabei wird die in der Rinne 4 enthaltene Luft mitgenommen und ebenfalls in Richtung des Pfeiles P1 bewegt.

Wenn der Konvektor 2 entsprechend der Darstellung in Fig. 1 unterhalb der Fensterfläche 1 angeordnet ist, fällt Kaltluft in Richtung des Pfeiles P2 in die Rinne 4 ein. Diese Kaltluft sowie Umgebungsluft der Rinne 4 werden von der in Richtung des Pfeiles P1 in der Rinne 4 bewegten Luft mitgerissen bzw. angesaugt. Der entsprechende Luftstrom wird durch die Platten 8 des Heizkörpers 5 geleitet und durch dieselben bzw. durch den Heizkörper 5 selbst erwärmt. Er steigt in Richtung des Pfeiles P3 nach oben auf und gelangt als Warmluft in den Raum, in welchem der Konvektor 2 angebracht ist. Zur verbesserten Führung der in die Rinne 4 gelangenden Luft sowie des durch die Platten 8 des Heizkörpers 5 geleiteten Luftstroms kann in der Rinne 4 mindestens ein in Fig. 2 eingezeichnetes Luftleitelement 9 angebracht sein. Der beispielsweise in Fig. 3 in einer Seitenansicht schematisch angedeutete Heizkörper 5 ist in der Rinne 4 drehbar gelagert. Er wird beim Betrieb des Konvektors 2 um seine Achse A gedreht. Dazu kann ein schematisch angedeuteter Antrieb 10 eingesetzt werden. Der Antrieb 10 kann mit Vorteil ein hydraulischer Antrieb sein, der nach Art einer Turbine arbeitet und vorzugsweise in das Rohr 7 bzw. in ein an dasselbe angeschlossenes Leitungsrohr eingebaut ist, so wie es in Fig. 3 dargestellt ist. Als Antrieb 10 kann aber beispielsweise auch ein Elektromotor verwendet werden.

Während des Betriebes des Konvektors 2 wird dem Heizkörper 5 warmes bzw. heißes Wasser zugeführt, und zwar beispielsweise aus einem Kessel 11. Zum Zuführen des Wassers ist zwischen Kessel 11 und Heizkörper 5 eine Rohrleitung 12 vorgesehen. Wenn als Antrieb 10 ein im zentralen Rohr 7 bzw. in der Rohrleitung 12 angeordneter hydraulischer Antrieb eingesetzt ist, kann das durch die Rohrleitung 12 geförderte Wasser mit Vorteil als Antriebsmedium dienen. Das durch den Heizkörper 5 bzw. dessen Rohr 7 hindurchgetretene Wasser kann über eine Rohrleitung 13 zurück zum Kessel 11 geführt werden. Die Rohrleitungen 12 und 13 sind mit dem Heizkörper 5 über Drehverschraubungen 14 bzw. 15 verbunden, die mit Gleitlagern oder Kugellagern ausgerüstet sein können.

Der Heizkörper 5 hat entsprechend der Darstellung in den Fig. 1 und 2 in bevorzugter Ausführungsform einen kreisrunden Querschnitt. Sein Querschnitt kann aber auch eine andere geometrische Form haben, solange sichergestellt ist, daß der Heizkörper 5 in der Rinne 4 störungsfrei drehbar ist. Der Querschnitt des Heizkörpers 5 einschließlich der Platten 8 kann gemäß Fig. 4 quadratisch sein oder gemäß Fig. 5 die Form eines Polygons haben. Auch ein rechteckiger oder ovaler Querschnitt des Heizkörpers 5 sind möglich.

Die vom Heizkörper 5 abstehenden Vorsprünge können entsprechend den vorangehenden Ausführungen Platten 8 sein. Statt der Platten 8 könnten entsprechend der Darstellung in Fig. 6 auch Stifte 16 eingesetzt werden, die von der Oberfläche des Heizkörpers 5 nach außen abstehen. Sie sind getrennt voneinander auf der ganzen äußeren Oberfläche des Heizkörpers 5 angebracht und mit Vorteil so geformt. daß die Luft so wie im Vorangehenden geschildert, mitgerissen bzw. angesaugt wird.

## Patentansprüche

1. Anordnung mit einem langgestreckten Heizkörper und einer wannenförmigen Rinne mit etwa rechteckigem Querschnitt, bei welcher der Heizkörper in Arbeitsposition in der Rinne angeordnet ist, bei welcher der Heizkörper Anschlußelemente zum Zuführen eines Heizmediums hat und bei welcher auf der ganzen äußeren Oberfläche des Heizkörpers nach außen abstehende Vorsprünge angebracht sind, **dadurch gekennzeichnet, daß** der Heizkörper (5) in der Rinne (4) um seine Achse (A) drehbar gelagert und mit einem Antrieb (10) verbunden ist, durch welchen er während des Betriebes der Anordnung um seine Achse (A) drehbar ist.

2. Anordnung nach Anspruch 1, **dadurch gekennzeichnet, daß** der Heizkörper (5) Anschlußelemente zum Zuführen und zum Abführen eines fließfähigen Heizmediums, insbesondere von warmem bzw. heißem Wasser, hat.

3. Anordnung nach Anspruch 1 oder 2, **dadurch gekennzeichnet, daß** die von der Oberfläche des Heizkörpers (5) abstehenden Vorsprünge aus Metall bestehende Platten (8) sind, die parallel und mit Abstand zueinander angeordnet sind.

4. Anordnung nach Anspruch 1 oder 2, **dadurch gekennzeichnet, daß** die von der Oberfläche des Heizkörpers (5) abstehenden Vorsprünge aus Metall bestehende Stifte (16) sind, die getrennt voneinander angeordnet sind.

5. Anordnung nach Anspruch 1, **dadurch gekennzeichnet, daß** der Antrieb (10) ein hydraulischer Antrieb ist.

6. Anordnung nach Anspruch 1, **dadurch gekennzeichnet, daß** der Antrieb (10) ein Elektromotor ist.

7. Verfahren zum Beheizen eines Raums eines Gebäudes mit einer Anordnung nach Anspruch 1, **dadurch gekennzeichnet,**
- **daß** in dem Raum eine wannenförmige Rinne (4) mit einem in derselben angeordneten langgestreckten Heizkörper (5) angebracht wird und
- **daß** der Heizkörper (5) während des Betriebes der Anordnung durch einen Antrieb (10) um seine Achse (A) gedreht wird.

## Geänderte Patentansprüche

### Geänderte Patentansprüche gemäss Regel 137(2) EPÜ.

1. Anordnung mit einem langgestreckten Heizkörper und einer wannenförmigen Rinne mit etwa rechteckigem Querschnitt, bei welcher der Heizkörper in Arbeitsposition in der Rinne angeordnet ist, bei welcher der Heizkörper Anschlußelemente zum Zuführen eines Heizmediums hat und bei welcher am Heizkörper auf seiner ganzen axialen Länge mit Abstand zueinander nach außen abstehende Bauelemente angebracht sind, **dadurch gekennzeichnet,**
- **dass** die Bauelemente als von der Oberfläche des Heizkörpers (5) abstehende Vorsprünge aus Metall ausgeführt und mit Abstand zueinander bzw. getrennt von einander auf dem Heizkörper angebracht sind und
- **dass** der Heizkörper (5) in der Rinne (4) um seine Achse (A) drehbar gelagert und mit einem Antrieb (10) verbunden ist, durch welchen er während des Betriebes der Anordnung um seine Achse (A) drehbar ist.

2. Anordnung nach Anspruch 1, **dadurch gekennzeichnet, dass** die Vorsprünge Platten (8) aus Metall sind, die parallel und mit Abstand zueinander auf dem Heizkörper (5) befestigt sind.

3. Anordnung nach Anspruch 1, **dadurch gekennzeichnet, dass** die Vorsprünge Stifte (16) aus Metall sind, die getrennt voneinander auf der ganzen Oberfläche des Heizkörpers (5) angebracht sind.

4. Anordnung nach Anspruch 1, **dadurch gekennzeichnet, dass** der Heizkörper (5) Anschlußelemente zum Zuführen und zum Abführen eines fließfähigen Heizmediums hat, insbesondere von warmem bzw. heißem Wasser.

5. Anordnung nach Anspruch 1, **dadurch gekennzeichnet, dass** der Antrieb (10) ein hydraulischer Antrieb ist.

6. Anordnung nach Anspruch 1, **dadurch gekennzeichnet, dass** der Antrieb (10) ein Elektromotor ist.

7. Verfahren zum Beheizen eines Raums eines Gebäudes mit einer Anordnung nach Anspruch 1, bei welcher ein langgestreckter Heizkörper in einer wannenförmigen Rinne mit etwa rechteckigem Querschnitt angeordnet ist, der auf seiner ganzen äußeren Oberfläche mit Abstand zueinander bzw. getrennt voneinander, nach außen abstehende Vorsprünge aus Metall hat, **dadurch gekennzeichnet, dass** der Heizkörper (5) während des Betriebes der Anordnung durch einen Antrieb (10) um seine Achse (A) gedreht wird, wodurch insbesondere durch die als parallel und mit Abstand zueinander angebrachten Platten bzw. durch die voneinander getrennt angebrachten Stifte (16) ausgeführten die Vorsprünge das Mitreißen von Luft durch den sich drehenden Heizkörper begünstigt wird.
